# EUROPÄISCHE PATENTSCHRIFT

(11) **EP 0 608 738 B1**
(45) Veröffentlichungstag und Bekanntmachung des Hinweises auf die Patenterteilung: **30.07.1997**
(21) Anmeldenummer: 94100565.4
(22) Anmeldetag: 17.01.1994
(51) Int. Cl.: C08G 18/72, C08G 18/79, C08G 18/80

(54) **Zweikomponenten-Polyurethanbeschichtungsmassen und ihre Verwendung**
Two component polyurethane coating compositions and their use
Revêtements de polyuréthane à deux composants et leur utilisation

(30) Priorität: 28.01.1993 DE 4302266
(43) Veröffentlichungstag der Anmeldung: 03.08.1994
(73) Patentinhaber: BAYER AG, 51368 Leverkusen (DE)
(72) Erfinder: Hentschel, Karl-Heinz, Dr., D-51429 Bergisch Gladbach (DE); Walter, Ulrich, Dipl.-Ing., D-40764 Langenfeld (DE); Riberi, Bernd, Dr., D-51519 Odenthal (DE)

(56) Entgegenhaltungen:
- EP-A- 0 316 738

## Beschreibung

Die Erfindung betrifft lösungsmittelfreie oder -arme Zweikomponenten-Polyurethan-Beschichtungsmassen auf Basis von speziellen Kombinationen aus ausgewählten Polyisocyanaten und ausgewählten Polyhydroxylverbindungen und ihre Verwendung zur Herstellung von Fußboden-Versiegelungen und -Dünnbeschichtungen.

Bodenversiegelungen sind Anstriche einer Trockenfilmdicke zwischen 60 und 250 µm, die zum Zwecke einer Verfestigung des Untergrundes, einer ästhetisch anspruchsvollen Bestaltung, sowie einer Erhöhung der Chemikalienbeständigkeit, des Verschleißwiderstandes und der Kratzfestigkeit auf Fußböden appliziert werden. Beispielsweise setzt man Bodenversiegelungen ein, um Zementestrichböden zu verfestigen und kratzfest auszurüsten, wenn man an die Rißüberbrückungsfähigkeit keine besonderen Ansprüche stellt, um leicht vergilbenden oder verbräunenden Fußbodenbeschichtungen eine ästhetisch anspruchsvollere und farbtonbeständigere Deckschicht zu verleihen, oder um alte, stark verkratzte und beschädigte Fußbodenbeschichtungen ohne einen völlig neuen Aufbau der Beschichtung zu renovieren.

Dem Verarbeiter stehen für Bodenversiegelungsmassen eine Reihe praxiserprobter Polyurethansysteme zur Verfügung. Die bislang eingesetzten einkomponentig zu verarbeitenden Versiegelungsmassen auf Basis von NCO-Präpolymeren aus 4,4'-Diisocyanatodiphenylmethan (vgl. z.B. das Technische Merkblatt des Anmelders "Desmodur E 21" vom Dezember 1990) neigen jedoch zu nachträglichem Vergilben und benötigen zu ihrer Applikation in der Regel flüchtige Lösungsmittel der aus der Lacktechnologie an sich bekannten Art. Auch Versiegelungsmassen auf Basis von NCO-Präpolymeren des 1-Isocyanato-3,3,5-trimethyl-5-isocyanatomethylcyclohexans (IPDI) und Oxazolanhärtern, wie sie von K.-H. Hentschel und E. Jürgens auf dem XXI. FATIPEC-Kongress (1992) in Amsterdam vorgestellt worden sind (vgl. Kongress-Bulletin, Vol. 3, Seiten 87 ff.) oder auf Basis von Kombinationen aus urethanisiertem Diisocyanatotoluol und Polyesterpolyolen (vgl. z.B. Technisches Merkblatt des Anmelders "Desmodur L", Ausgabe 1.1.1986) können in der Praxis nur unter Mitverwendung beträchtlicher Mengen an flüchtigen Lösungsmitteln verarbeitet werden.

Aufgrund ihrer exzellenten Farbtonbeständigkeit finden auch Kombinationen von Biuret- oder Isocyanuratgruppen enthaltenden Polyisocyanaten auf Basis von 1,6-Diisocyanatohexan mit Polyesterpolyolen ebenfalls breite Anwendung zur dekorativen Gestaltung von Fußboden-Kunstharzbeschichtungen (vgl. z.B. den Beitrag von W. Kubitza auf dem Internationalen Kolloquium über Industriefußböden vom 15. bis 17. 1. 1991, Bulletin, Seiten 533-537).

Solche Bodenversiegelungsmassen lassen sich vollkommen lösemittelfrei applizieren und härten zu Filmen durch, welche sich sehr gut reinigen lassen. Allerdings muß eine nur mäßige Abrieb- und Kratzfestigkeit in Kauf genommen werden, da solche Versiegelungen relativ weich sind. In der Härte und Abriebbeständigkeit erheblich besser sind Versiegelungen auf der Basis von Kombinationen der vorbezeichneten Polyisocyanate auf HDI-Basis mit hydroxyfunktionellen Polyacrylat- oder Polymethacrylatharzen. Diesem Vorteil steht jedoch der beträchtliche Lösemittelgehalt der applikationsfertigen Versiegelungsmassen auf dieser Basis gegenüber.

Es war daher die der Erfindung zugrundeliegende Aufgabe, Beschichtungsmassen auf Polyurethanbasis zur Verfügung zu stellen, die insbesondere zur Oberflächenversiegelung von Fußböden geeignet sind, lösungsmittelfrei oder lösungsmittel-arm formuliert werden können, rasch bei den unterschiedlichsten Umgebungsbedingungen durchhärten und leicht zu reinigende Versiegelungsfilme mit guter Chemikalenbeständigkeit, hinreichend guter Farbtonbeständigkeit, hoher Härte, sowie ausgezeichneter Kratz- und Abriebbeständigkeit ergeben.

Diese Aufgabe konnte mit der Bereitstellung der nachstehend näher beschriebenen erfindungsgemäßen Zweikomponenten-Polyurethanbeschichtungsmassen gelöst werden. Bei den erfindungsgemäßen Beschichtungsmassen handelt es sich um solche, die lösungsmittelfrei oder -arm verarbeitbar sind. Hierunter sind solche Systeme zu verstehen, die einen Gehalt an gegenüber Isocyanatgruppen inerten Lösungsmitteln mit einem bei Normaldruck unterhalb 180°C liegenden Siedepunkt von weniger als 20, vorzugsweise von weniger als 10 Gew.-% aufweisen. Besonders bevorzugt enthalten die erfindungsgemäßen Beschichtungsmassen überhaupt keine derartigen, leicht flüchtigen Lösungsmittel.

Gegenstand der Erfindung sind Zweikomponenten-Polyurethan-Beschichtungsmassen, bestehend im wesentlichen aus
A) einer Polyisocyanatkomponente,
B) einer Polyolkomponente und gegebenenfalls
C) aus der Beschichtungstechnologie üblichen Hilfs- und Zusatzstoffen,
wobei die Komponenten A) und B) in einem NCO/OH-Äquivalentverhältnis von 0,9:1 bis 1,3:1 entsprechenden Mengen vorliegen, dadurch gekennzeichnet, daß
die Komponente A) aus einem Gemisch aus
50 bis 95 Gew.-% (cyclo)aliphatischen Polyisocyanaten A1), bestehend zu
50 bis 100 Gew.-% aus Isocyanurat- und Uretdiongruppen aufweisenden Derivaten des 1,6-Diisocyanatohexans A1.1) mit einer Viskosität bei 23°C von 100 bis 300 mPa.s, einem Gehalt an Isocyanatgruppen von 20 bis 24 Gew.-% und einem Gehalt an Urethangruppen von 0 bis 5 Gew.-%
und zu
0 bis 50 Gew.-% aus anderen Lackpolyisocyanaten A1.2) mit (cyclo)aliphatisch gebundenen Isocyanatgruppen aus (i) Uretdiongruppen-freien, Isocyanuratgruppen aufweisenden Trimerisaten des 1,6-Diisocyanatohexans mit einem NCO-Gehalt von 20 bis 23 Gew.-% und/oder (ii) Biuretgruppen aufweisende Polyisocyanate auf Basis des 1,6-Diisocyanatohexans mit einem NCO-Gehalt von 21 bis 24 Gew.-% .
und
5 bis 50 Gew.-% aromatischen Polyisocyanaten A2), bestehend zu
50 bis 100 NCO-Äquivalent-% aus Urethangruppen aufweisenden Polyisocyanaten auf Basis von 2,4- und gegebenenfalls 2,6-Diisocyanatotoluol mit
i) einem NCO-Gehalt von 12 bis 20 Gew.-%,
ii) einem Gehalt an Urethangruppen (berechnet als CHNO₂) von 12 bis 29 Gew. %
und zu
0 bis 50 NCO-Äquivalent-% aus anderen Polyisocyanaten A2.2) mit aromatisch gebundenen Isocyanatgruppen aus (i) Isocyanuratgruppen aufweisenden Trimerisaten des 2,4- und gegebenenfalls 2,6-Diisocyanatotoluols mit einem NCO-Gehalt von 14 bis 18 Gew.-% und/oder (ii) Isocyanuratgruppen aufweisenden Mischtrimerisaten des 1,6-Diisocyanatohexans mit 2,4- und gegebenenfalls 2,6-Diisocyanatotoluol mit einem NCO-Gehalt von 15 bis 20 Gew.-%
und die Polyolkomponente B) aus einem Gemisch aus
50 bis 100 Gew.-% organischen Polyhydroxylverbindungen B1) mit einem (mittleren) Hydroxylgehalt von 6 bis 23 Gew.-% und einer (mittleren) Hydroxylfunktionalität von 2 bis 4, ausgewählt aus der Gruppe bestehend aus (i) Polycaprolacton-Polyolen, (ii) Polyetherpolyolen, deren Alkylenoxid-Einheiten zu 80 bis 100 Gew.-% aus Propylenoxid-Einheiten und zu 0 bis 20 Gew.-% aus Ethylenoxideinheiten bestehen und (iii) Gemischen der unter (i) und (ii) genannten Polyhydroxylverbindungen
und
0 bis 50 Gew.-% aus anderen organischen Polyhydroxylverbindungen B2) bestehen.

Gegenstand der Erfindung ist auch die Verwendung dieser Beschichtungsmassen zur Herstellung von Fußboden-Versiegelungen oder -Dünnbeschichtungen.

Die Polyisocyanatkomponente A) besteht aus einem Gemisch aus 50 bis 95 Gew.-% aliphatischen Polyisocyanaten A1) und 5 bis 50 Gew.-% aromatischen Polyisocyanaten A2).

Die aliphatische Komponente A1) ihrerseits besteht zu 50 bis 100, vorzugsweise 90 bis 100 Gew.-% aus niedrigviskosen Derivaten des 1,6-Diisocyanatohexans (HDI) mit den bereits oben unter A1.1) genannten Kenndaten und 0 bis 50, vorzugsweise 0 bis 10 Gew.-% aus anderen aliphatischen Lackpolyisocyanaten A1.2).

Die Herstellung der niedrigviskosen, Isocyanurat- und Uretdiongruppen aufweisenden HDI-Derivate A1.1) erfolgt beispielsweise durch Oligomerisierung von HDI in Gegenwart von Tributylphosphin als Oligomerisierungskatalysator und Abbruch der Oligomerisierungsreaktion beim gewünschten Oligomerisierungsgrad durch Zugabe eines geeigneten Katalysatorgifts und destillativer Entfernung des nicht umgesetzten Überschusses an überschüssigem HDI. Bei dieser Reaktion können gewünschtenfalls unterschüssige Mengen an Alkoholen, wie beispielsweise ein- und mehrwertige Alkohole des Molekulargewichtsbereichs 32 bis 200 oder deren Gemische mitverwendet werden, um in die Oligomerisierungsprodukte Urethangruppen in einer Menge von bis zu 5 Gew.-% einzubauen. Geeignete Alkohole sind beispielsweise Methanol, Ethanol, n-Propanol, Isopropanol, n-Butanol, n-Hexanol, 2-Ethylhexanol-1, Ethylenglykol, die isomeren Butandiole, Hexandiole, Octandiole, Diethylenglykol, Dipropyenglykol, Glycerin oder Trimethylolpropan. In den niedrigviskosen Polyisocyanate A1.1) liegt das Molverhältnis von Uretdion-zu Isocyanuratgruppen im allgemeinen bei 1:1 bis 4:1, während die Viskosität bei 23°C, wie bereits oben ausgeführt, bei 100 bis 300 mPa.s liegt.

Bei den in der Komponente A1) gegebenenfalls vorliegenden aliphatischen Polyisocyanaten A1.2) handelt es sich insbesondere um an sich bekannte Lackpolyisocyanate auf Basis von HDI, die keine Uretdiongruppen aufweisen. Hierzu gehören insbesondere Uretdiongruppen-freie, Isocyanuratgruppen aufweisende Polyisocyanate mit einem NCO-Gehalt von 20 bis 23 Gew.-%, bezogen auf das lösungsmittelfreie Polyisocyanat, auf Basis von HDI oder Biuretgruppen aufweisende Polyisocyanate auf Basis von HDI mit einem NCO-Gehalt von 21 bis 24 Gew.-%, bezogen auf das lösungsmittelfrei Polyisocyanat. Die Herstellung dieser Lackpolyisocyanate kann beispielsweise gemäß EP-B-0010589 oder EP-B-0003505 erfolgen. Polyisocyanatgemische A1) aus Uretdion- und Isocyanurat-Gruppen aufweisenden Polyisocyanaten A1.1) mit Isocyanuratgruppen aufweisenden, Uretdion-freien HDI-Derivaten A1.2) können sowohl durch Abmischung der Einzelkomponenten als auch durch geeignete Steuerung der unter Uretdion- und Isocyanuratbildung ablaufenden HDI-Oligomerisierung in situ hergestellt werden.

Die aromatische Polyisocyanatkomponente A2) besteht zu 50 bis 100, vorzugsweise 90 bis 100 Gew.-% aus Urethangruppen aufweisenden Derivaten des 2,4- und gegebenenfalls 2,6-Diisocyanatotoluols mit den bereits obengenannten Kenndaten und zu 0 bis 50, vorzugsweise 0 bis 10 Gew.-% aus sonstigen aromatischen Polyisocyanaten, insbesondere Lackpolyisocyanaten A2.2).

Bei den aromatischen Polyisocyanaten A2.1) handelt es sich um Derivate des 2,4-Diisocyanatotoluols bzw. von dessen Gemischen mit bis zu 35 Gew.-%, bezogen auf Gemisch, an 2,6-Diisocyanatotoluol. Die Herstellung derartiger, Urethangruppen aufweisender Polyisocyanate erfolgt durch Umsetzung der genannten Diisocyanate mit unterschüssigen Mengen an mehrwertigen Alkoholen wie beispielsweise Trimethylolpropan, den isomeren Butandiolen oder Gemischen derartiger, mehrwertiger Alkohole und anschließender destillativer Entfernung des nicht umgesetzten Überschusses an Ausgangsdiisocyanat durch Dünnschichtdestillation. Die Herstellung dieser Urethangruppen aufweisender Polyisocyanate kann beispielsweise gemäß DE-PS 1 090 196 bzw. US-PS 3 183 112 erfolgen.

Bei den anderen aromatischen Polyisocyanaten A2.2) handelt es sich insbesondere um Isocyanuratgruppen aufweisende Polyisocyanate auf Basis von 2,4- und/oder 2,6-Diisocyanatotoluol mit einem NCO-Gehalt von 14 bis 18 Gew.-%, bezogen auf das lösungsmittelfreie Polyisocyanat, wie sie in an sich bekannter Weise, beispielsweise gemäß DE-PS 1 954 093 unter anschließender Entfernung des inerten Hilfslösungsmittels und nicht umgesetzten Überschusses an Ausgangsdiisocyanat durch Dünnschichtdestillation herstellbar sind oder um Isocyanuratgruppen aufweisende Mischpolymerisate auf Basis von 1,6-Diisocyanatohexan und 2,4-und gegebenenfalls 2,6-Diisocyanatotoluol mit einem NCO-Gehalt von 15 bis 20, bezogen auf das lösungsmittelfrei Polyisocyanat, wie sie beispielsweise gemäß DE-PS 1 670 667 zugänglich sind.

Allen in den erfindungsgemäßen Beschichtungsmassen vorliegenden Polyisocyanaten ist gemeinsam, daß sie maximal 0,5 Gew.-% an zu ihrer Herstellung eingesetzten Ausgangsdiisocyanaten enthalten.

Die Polyolkomponente B) besteht zu 50 bis 100 Gew.-%, vorzugsweise 80 bis 100 Gew.-% aus Polyolen B1) mit den bereits obengenannten Kenndaten und zu 0 bis 50, vorzugsweise 0 bis 20 Gew.-% aus anderen Polyolen B2).

Bei den Polyolen B1) handelt es sich um solche mit einem (mittleren) OH-Gehalt von 6 bis 23, vorzugsweise 11 bis 23 Gew.-% und einer OH-Funktionalität von 2 bis 4, ausgewählt aus der Gruppe bestehend aus (i) Polycaprolacton-polyolen, (ii) Polyetherpolyolen, deren Alkylenoxideinheiten zu mindestens 80 Gew.-%, vorzugsweise ausschließlich aus Propylenoxideinheiten bestehen und (iii) Gemischen der genannten Polyhydroxylverbindungen.

Die Herstellung der Polycaprolacton-polyole erfolgt auf an sich bekannte Weise durch Umsetzung von ε-Caprolacton mit di- bis tetrafunktionellen Polyolen, wie Ethylenglykol, Propylenglykol, Butandiol-1,4, Neopentylglykol, Glycerin, Trimethylolpropan, Pentaerythrit, Di-trimethylolpropan usw., in Gegenwart geeignete Umesterungskatalysatoren (z.B. Zinnverbindungen) bei erhöhter Temperatur. Solche Umsetzungen sind beispielsweise in der Encyclopädie of Polymer Science and Technology 5, 164 ff., oder in Kirk-Othmer (3.Auflage) Band 5, 640 ff. näher beschrieben.

Geeignete Polyetherpolyole der genannten Art und ihre Herstellung sind beispielsweise in Encyclopedia of Polymer Science and Technology 6, 273 ff., in Kirk-Othmer (3.Auflage) Band 18, 633 bis 645, oder in Ullmann (4.Auflage) Band 19, 31 bis 38 beschrieben.

Bei der gegebenenfalls mitzuverwendenden Polyolkomponente B2) handelt es sich um andere, d.h. von den Polyolen B1) verschiedenen Polyhydroxylverbindungen des Molekulargewichtsbereichs 62 bis 2 000, vorzugsweise 62 bis 1 000 bei einer OH-Funktionalität von 2 bis 4. In Betracht kommen beispielsweise einfache Alkandiole des Molekulargewichtsbereichs 62 bis 200 wie z.B. Ethylenglykol, Propylenglykol, Hexandiol-1,6, Trimethylolpropan und/oder Glycerin, Polyetherpolyole, die nicht der oben unter B1) gemachten Definition entsprechen des Molekulargewichtsbereichs 200 bis 1 000, Polyesterpolyole einer unter 30 Pa.s (23°C) liegenden Viskosität, welche mindestens zwei Hydroxylgruppen pro Molekül aufweisen, wie sie in an sich bekannter Weise aus einfachen Alkanpolyolen der oben beispielhaft genannten Art mit mehrwertigen Carbonsäuren, insbesondere Dicarbonsäuren bzw. Dicarbonsäureanhydriden wie Adipinsäure, Maleinsäure, Maleinsäureanhydrid, Phthalsäure, Isophthalsäure, Tetrahydrophthalsäure, Hexahydrophthalsäure und/oder den Anhydriden der zuletzt genannten, zur Anhydridbildung befähigten Säuren. Auch Carbonatpolyole der aus der Polyurethanchemie an sich bekannten Art können als Komponente B2) bzw. als Teil der Komponente B2) eingesetzt werden. Auch Rizinusöl ist im Prinzip verwendbar.

Die Polyhydroxylverbindungen B2) sollten bei 23°C eine Viskosität von maximal 30 000, vorzugsweise maximal 10 000 mPa.s aufweisen.

Durch geeignete Wahl der Art und Menge der mitverwendeten Polyhydroxylverbindungen B2) können Viskosität des zweikomponentigen Bindemittelgemischs, sowie die Eigenschaften, insbesondere die Härte der resultierenden Beschichtung auf einfache Weise den jeweiligen Erfordernissen der Praxis angepaßt werden.

In den erfindungsgemäßen Beschichtungsmassen liegen die Komponenten A) und B) in solchen Mengenverhältnissen vor, die einem NCO/OH-Äquivalentverhältnis von 0,9:1 bis 1,3:1 entsprechen.

Die Einzelkompenenten werden im Rahmen der gemachten Ausführungen vorzugsweise so gewählt, daß die durch Vermischen der Einzelkomponenten A) und B) erhaltenen Bindemittelgemische eine Viskosität bei 23°C von unter 50 000, vorzugsweise von unter 30 000 und besonders bevorzugt von unter 10 000 mPa.s und eine Topfzeit von 20 Minuten bis 10 Stunden, vorzugsweise von 40 Minuten bis 4 Stunden aufweisen. Die erfindungsgemäßen Beschichtungsmassen können außer den genannten zweikomponentigen Bindemitteln in der Beschichtungstechnologie übliche Hilfs- und Zusatzstoffe enthalten, wie beispielsweise Füllstoffe, Pigmente, Weichmacher, hochsiedende Flüssigkeiten, Härtungskatalysatoren, UV-Schutzmittel, Antioxidantien, Mikrobizide, Algizide, Wasserfänger, Thixotropieträger, Netzmittel, Verlaufshilfsmittel, Mattierungsmittel, Antirutschmittel, Entlüftungsmittel oder Extender. Die Hilfs- und Zusatzstoffe werden je nach den Erfordernissen der durch die Applikation der Beschichtung zu lösenden Probleme und ihrer Verträglichkeit in die A- und B-Komponente eingemischt. So sollten beispielsweise wasserhaltige oder stark alkalische reagierende Zusatzstoffe nicht der A-, sondern der B-Komponente zugemischt werden.

Füllstoffe, die sich für Zweikomponenten-Polyurethanbeschichtungsmassen eignen, sind an sich bekannt. Es sind dies bevorzugterweise partikelförmige, kuglige oder plättchenförmige Füllstoffe mit niedrigem Feuchteanteil, deren Oberfläche nicht allzu stark alkalisch reagiert. Typische Vertreter solcher Füllstoffe sind Bariumsulfat, Quarzmehl, Kaolin, Kieselerden, gemahlene oder gefällte Kreiden (mit nicht allzu stark alkalischer Oberfläche), Glimmer usw.. Eine ausführliche Übersicht über Füllstoffe für Anstrichstoffe gibt beispielsweise das "Lehrbuch der Lacke und Beschichtungen, Band II., Pigmente, Füllstoffe, Farbstoffe", H. Kittel, Verlag W.A. Colomb in der Heenemann GmbH, Berlin - Oberschwandorf, 1974, S. 284 - 463. Die Füllstoffe können, falls überhaupt, in Mengen von bis zu 200 Gew.-Teilen pro 100 Gew.-Teilen des aus den Komponenten A) und B) bestehenden Bindemittelgemischs eingesetzt werden.

Geeignete Pigmente sind beispielsweise Titandioxid, Zinkoxid, Eisenoxide, Chromoxide oder Ruße. Eine ausführliche Übersicht über Pigmente für Anstrichstoffe gibt das "Lehrbuch der Lacke und Beschichtungen, Band II, Pigmente, Füllstoffe, Farbstoffe", Kittel, Verlag W.A. Colomb in der Heenemann GmbH, Berlin - Oberschwandorf, 1974, S. 17-265. Die beispielhaft genannten Pigmente können, falls überhaupt, in Mengen von bis zu 45 Gew.-%, bezogen auf das aus den Einzelkomponenten A) und B) bestehende Bindemittelgemisch eingesetzt werden.

Zur Viskositätseinstellung der gebrauchsfertigen Beschichtungsmassen können Weichmacher oder hochsiedende Flüssigkeiten mitverwendet werden. Hierunter sollen Flüssigkeiten verstanden werden, die unter Normaldruck einen über 180°C liegenden Siedepunkt aufweisen bzw. die unter Normaldruck überhaupt nicht mehr destillierbar sind. Für diesen Zweck geeignet sind beispielsweise Phthalsäure-, Adipinsäure-oder Phosphorsäureester von C₄-C₁₈-Alkanolen und/oder Vinylester von Alkarylsulfonsäuren. Zu den weiterhin geeigneten hochsiedenden Flüssigkeiten, die besonders gut zur Viskositätseinstellung geeignet sind, gehören Alkylencarbonate wie beispielsweise Ethylen- oder Propylencarbonat. Die beispielhaft genannten Weichmacher bzw. hochsiedenden Flüssigkeiten können, falls überhaupt, in Mengen von bis zu 65 Gew.-%, bezogen auf das Gewicht des aus den Einzelkomponenten A) und B) bestehenden Bindemittelgemischs eingesetzt werden.

In speziellen Fällen z.B. zum Einstellen sehr niedriger Applikationsviskositäten oder sehr dünner Trockenfilmstücken können auch übliche Lösungsmittel, die unter Normaldruck einen unter 180°C liegenden Siedepunkt aufweisen, wie beispielsweise Butylacetat, 1-Methoxypropylacetat, Ethylacetat, Xylol oder Gemische derartiger Lösungsmittel in Mengen von bis zu maximal 20, vorzugsweise maximal 10 Gew.-%, bezogen auf das Gewicht des aus den Einzelkomponenten A) und B) bestehenden Bindemittels mitverwendet werden. Da die Mitverwendung derartiger Lösungsmittel jedoch der Aufgabe der vorliegenden Erfindung widersprechen würde, ist ihr Einsatz keineswegs bevorzugt.

Die erfindungsgemäßen Beschichtungsmassen können auch Katalysatoren der aus der Polyurethanchemie an sich bekannten Art enthalten. Hierzu gehören beispielsweise die bekannten Blei- oder Wismutverbindungen, vorzugsweise die in diesem Zusammenhang bekannten Zinnverbindungen und tertiären Amine wie sie beispielsweise in "Kunststoff Handbuch 7, Polyurethane" Carl-Hanser-Verlag, München - Wien, 1984, S. 97-98, näher beschrieben sind. Derartige Katalysatoren können, falls überhaupt, in Mengen von bis zu 4 Gew.-%, bezogen auf das Gewicht des aus den Einzelkomponenten A) und B) bestehenden Bindemittels eingesetzt werden.

Weitere, in den erfindungsgemäßen Beschichtungsmassen gegebenenfalls mitverwendete Hilfs- und Zusatzstoffe sind beispielsweise UV-Schutzmittel, Antioxidantien, Mikrobizide, Algizide, Wasserfänger, Thixotropieträger, Netzmittel, Verlaufsmittel, Mattierungsmittel, Antirutschmittel, Entlüftungsmittel oder Extender. Derartige Hilfs- und Zusatzmittel sind beispielsweise in "Lehrbuch der Lacke und Beschichtungen, Band III., Lösemittel, Weichmacher, Additive, Zwischenprodukte", H. Kittel, Verlag W.A. Colomb in der Heenemann GmbH, Berlin - Oberschwandorf, 1976, S. 237-398, beschrieben. Als Wasserfänger wirkende Trockenmittel sind beispielsweise in "Kunststoff Handbuch 7, Polyurethane", Carl-Hanser-Verlag, München - Wien, 1983, S. 545 näher beschrieben. Die Gesamtmenge derartiger weiterer Hilfs- und Zusatzstoffe beträgt im allgemeinen 0 bis 25 Gew.-%, bezogen auf das aus den Einzelkomponenten A) und B) bestehende Bindemittel.

Die Herstellung der erfindungsgemäßen Beschichtungsmassen erfolgt durch Vermischen der Einzelkomponenten, beispielsweise unter Verwendung der bekannten Dissolver oder Vakuumdissolver, die oftmals bevorzugt sind, um eine weitgehende Entgasung der Beschichtungsmassen zu erreichen.

Die erfindungsgemäßen Beschichtungsmassen eignen sich insbesondere zur Herstellung von Fußboden-Versiegelungen. Bei dieser Anwendung werden die Beschichtungsmassen in solchen Mengen aufgetragen, daß Trockenfilmdicken von 30 bis 600, vorzugsweise 60 bis 400 µm resultieren. Der Auftrag der Beschichtungsmassen erfolgt nach an sich bekannten Methoden, wie beispielsweise Spachteln oder Rollen unter Verwendung der hierzu üblichen Werkzeuge.

Die erfindungsgemäßen Beschichtungsmassen können zum Versiegeln gewerblich oder privat genutzter Fußböden, vorzugsweise im Innenbereich, genutzt werden. Der Untergrund kann aus alten, verkratzten oder verschlissenen Fußbodenbeschichtungen oder Kunststoffbelägen bestehen. In diesem Falle wird die Bodenoberfläche durch Anschleifen aufgerauht und so für das Versiegeln vorbereitet. Gegebenenfalls wird die Haftung der erfindungsgemäßen Zweikomponenten-Polyurethanversiegelungsmassen auf solcherart präparierten Untergründen durch vorherige Applikation eines geeigneten Zwischenprimers verbessert. Der Untergrund kann jedoch auch anorganische Materialien umfassen, wie Zementestriche, Beton, keramische Fliesen usw.. In diesem Falle wird eine Gesamtbeschichtung aufgebaut, die mit einer Versiegelung auf der Basis der erfindungsgemäßen Zweikomponenten-Polyurethanbeschichtungsmasse abschließt. Die Gesamtbeschichtung umfaßt entweder einen Voranstrich (Primer) mit abschließender Versiegelung oder aber einen Voranstrich, eine duktile, rißüberbrückende Zwischenschicht ("Schwimmschicht") und die Versiegelung als Deckschicht.

Dünnbeschichtungen sind Bodenbeschichtungen mit etwas höherer Trockenfilmdicke von 250 bis 1000 µm. Man setzt sie beispielsweise für Böden in der Lebensmittelindustrie oder im Lebensmittelhandel, wo gute optische Eigenschaften, sehr gute Reinigbarkeit sowie eine hohe mechanische Beanspruchbarkeit (Befahren mit Gabelstaplern) gefordert werden. Der Aufbau solcher Dünnbeschichtungen erfolgt durchaus analog zu dem der Versiegelungen.

Mit den nachfolgenden Beispielen sollen die erfindungsgemäßen Zweikomponenten-Polyurethanbeschichtungsmassen oder -Dünnbeschichtungen und ihre Anwendung weiter erläutert werden. Prozentangaben beziehen sich auf das Gewicht.

### Beispiele

In den nachfolgenden Beispielen und Vergleichsbeispielen werden folgende Rohstoffe eingesetzt:

### Isocyanatkomponenten

### Polyisocyanat I

Isocyanurat- und Uretdiongruppen aufweisendes Oligomerisierungsprodukt von 1,6-Diisocyanatohexan (HDI) mit einerm Gehalt an Urethangruppen von 2 %, an Isocyanatgruppen von 21,6 % und einer Viskosität (23°C) von 200 mPa.s.

### Polyisocyanat II (erfindungsgemäßes Gemisch A)

Zu 3864 g einer TDI-Mischung aus 2511,6 g 2,4-Diisocyanatotoluol (65 %) und 1352,4 g 2,6-Diisocyanatotoluol (35 %) tropft man bei 80°C langsam eine Mischung aus 252 g Trimethylolpropan und 120 g Diethylenglykol zu. Nach zweistündigem Nachrühren bei 80°C wird das Produkt duch Vakuum-Dünnschichtdestillation bei 140°C/0,13 hPa vom monomeren Diisocyanat befreit.

Noch im erhitzten Zustand rührt man in 1650 g des so erhaltenen, lösemittelfreien, Urethangruppen enthaltenden Polyisocyanats (Viskosität bei 100°C über 40 000 mPa.s, NCO-Gehalt 17,3 %, TDI-Monomerengehalt 0,31 %, Urethangruppengehalt 28,2 %) 3300 g des zuvor auf 80°C erwärmten Polyisocyanats I bis zur Homogenität der Mischung ein.

Das hiermit erhaltene Polyisocyanat II weist eine Viskosität (23°C) von 5000 mPa.s, einen NCO-Gehalt von 20,2 %, einen Gehalt an monomerem TDI von 0,1 % und einen Gehalt an monomerem HDI von 0,33 % auf.

### Polyisocyanat III

Biuretpolyisocyanat auf Basis von HDI, 75 %ig gelöst in 1-Methoxypropylacetat-2/Xylol (1 : 1) mit einer Viskosität der Lösung (23°C) von 225 mPa.s und einem NCO-Gehalt der Lösung von 16,5 %.

### Polyisocyanat IV

Biuretpolyisocyanat auf Basis von HDI (100 %ig) einer Viskosität (23°C) von 2500 mPa.s mit einem NCO-Gehalt von 23 %.

### Polyisocyanat V

Urethangruppen aufweisendes Polyisocyanat auf TDI-Basis entsprechend dem aromatischen Anteil von Polyisocyanat II, 67 %ig gelöst in 1-Methoxypropylacetat-2/Xylol (1 : 1), mit einer Viskosität der Lösung (23°C) von 1500 mPa.s und einem NCO-Gehalt von 11,6 %.

### Polyisocyanat VI

Urethangruppen aufweisendes NCO-Prepolymer, hergestellt durch Umsetzung von (i) einem Polyisocyanatgemisch der Diphenylmethanreihe mit einem Gehalt an Diisocyanatodiphenylmethan-Isomeren von 55 % und an höherfunktionellen Homologen von 45 % mit (ii) einem Polyethergemisch aus 2 000 Gew.-Teilen Polypropylenglykol der OH-Zahl 56 und 3 750 Gew.-Teilen des Propoxylierungsproduktes von Ethylendiaminen der OH-Zahl 60, mit einer Viskosität des Prepolymeren (23°C) von 10 000 mPa.s und einem NCO-Gehalt des Prepolymeren von 16,0 %.

### Polyisocyanat VII

NCO-Gruppen aufweisendes Prepolymer, hergestellt durch Umsetzung von (i) einem Isomerengemisch aus 55 % 2,4'- und 45 % 4,4'-Diisocyanatodiphenylmethan mit (ii) einem Polyethergemisch aus 750 Gew.-Teilen propoxyliertem Ethylendiamin der OH-Zahl 60 und 400 Gew.-Teilen Polypropylenglykol der OH-Zahl 112, mit einer Viskosität des Prepolymeren (23°C) von 1950 mPa.s und einem NCO-Gehalt von 15,5 %.

### Polyolkomponente I

Auf Trimethylolpropan gestartetes Poly-ε-caprolacton-Polyol mit einem Hydroxylgruppengehalt von 17 %, einem Molekulargewicht von 300 und einer Viskosität (23°C) von 2100 mPa.s.

### Polyolkomponente II

Verzweigtes Polyesterpolyol einer Viskosität (23°C), gemessen an einer 70 %igen Lösung in 1-Methoxypropylacetat-2 von 750 mPa.s mit einem OH-Gehalt des 100 %igen Esters von 8,8 %, hergestellt durch Umsetzung von 130 Gew.-Teilen Propylenglykol und 245 Gew.-Teilen Trimethylolpropan mit 305 Gew.-Teilen Adipinsäure und 64 Gew.-Teilen Phthalsäureanhydrid

### Polyolkomponente III

Lineares Polyesterpolyol einer Viskosität (23°C), gemessen an einer 70 %igen Lösung in 1-Methoxypropylacetat-2 von 575 mPa.s und einem OH-Gehalt des 100 %igen Esters von 1,2 %.

### Polyolkomponente IV

Hydroxylgruppen aufweisendes Polyacrylatharz mit einer Viskosität (23°C) von 3000 mPa.s und einem OH-Gehalt von 1,6 %.

In den nachfolgenden Beispielen wurden, mit Ausnahme der in den Beispielen 3, 7 und 8 eingesetzten Lösungsmittel bzw. Katalysatoren keine der in der Beschichtungstechnologie üblichen Hilfs- und Zusatzstoffe mitverwendet. Dies bedeutet nicht, daß die erfindungsgemäßen Versiegelungsmassen bevorzugt unpigmentiert, ungefüllt und nicht additiviert eingesetzt werden sollen. Vielmehr sollten so die Einflüsse des eigentlichen Bindemittelsystems auf wichtige Eigenschaften, wie Kratzfestigkeit oder Chemikalienbeständigkeit, herausgearbeitet werden.

### Beispiel 1 (erfindungsgemäß)

Zum Anfertigen einer erfindungsgemäßen Versiegelungsmasse werden 67 Gew.-Teile Isocyanatkomponente II mit 32,2 Gew.-Teilen der Polyolkomponente I vermischt (Viskosität der Mischung (23°C) ca. 11 000 mPa.s, NCO/OH-Äquivalentverhältnis = 1,06 : 1) mit Hilfe einer Lammfellrolle auf einer Betonoberfläche, die durch einen Voranstrich mit einem wasserverdünnbaren Epoxyprimer vorbehandelt worden war, verteilt. Die Eigenschaften des ausgehärteten Films sind in der Tabelle 2 zusammengefaßt und mit denen der Vergleichsbeispiele verglichen.

### Beispiele 2 bis 8 (Vergleichsbeispiele)

Die in folgender Tabelle 1 zusammengefaßten ein- und zweikomponentigen Polyurethan-Versiegelungsmassen wurden formuliert, vermischt und auf - entsprechend vorbehandelte - Betonoberflächen aufgetragen.

**Tabelle 1**

| Zusammensetzungen der Vergleichsbeispiele 2 bis 8 (Angaben in Gew.-%) | | | | | | | |
|---|---|---|---|---|---|---|---|
| Bestandteile | 2 | 3 | 4 | 5 | 6 | 7 | 8 |
| Isocyanatkomponente III | | | 19,4 | | | | |
| Isocyanatkomponente IV | | | | | | | 49,0 |
| Isocyanatkomponente I | | | | | | 99,7 | 50,5 |
| Isocyanatkomponente V | 67,8 | 43,1 | | | | | |
| Isocyanatkomponente VI | | | | 100 | | | |
| Isocyanatkomponente VII | | | | | 100 | | |
| Polyolkomponente A | 32,2 | | | | | | |
| Polyolkomponente II | | 24,1 | | | | | |
| Polyolkomponente III | | 24,1 | | | | | |
| Polyolkomponente IV | | | 80,6 | | | | |
| 1-MPA* | | 8,7 | | | | | |
| DBTL* | | | | | | 0,3 | 0,5 |

| | | | | | | | |
|---|---|---|---|---|---|---|---|
| *) 1-MPA = 1-Methoxy-2-propylacetat, DBTL = Dibutylzinndilaurat | | | | | | | |

Wichtige Prüfergebnisse, wie die Abrasionsbeständigkeit nach Taber (CS 10, 500 bzw. 1000 Umdrehungen, 1 kg Belastung), der Applikationsfestkörper und die Chemikalienbeständigkeit sind für das Beispiel 1 und die Vergleichsbeispiele 2 bis 8 in der Tabelle 2 zusammengefaßt.

Die Chemikalienbeständigkeiten wurden, wie folgt, bestimmt: Auf Glasplatten aufgetragene Testfilme von jeweils 100 µm Trockenfilmdicke wurden 7 Tage bei 50°C ausgehärtet. Danach wurden die Filme mit folgenden Lösemitteln behandelt (Einwirkungsdauer ca. 5 Minuten) und anzukratzen versucht: Ethanol, 1-MPA, Aceton, Butylacetat. Die Bewertung erfolgte über folgende Kennzahlen: 0 = unbeschädigt, 1 = Oberfläche nur schwer ankratzbar, 2 = Oberfläche nur schwer bis zum Untergrund ankratzbar, 3 = Oberfläche bis zum Untergrund leicht ankratzbar, 4 = bei angequollenem Film ist die Oberfläche bis zum Untergrund leicht ankratzbar, 5 = angelöst. Für die Gesamtbeurteilung werden die einzelnen Kennzahlen addiert (beste Gesamtnote: 0, schlechtese Gesamtnote: 20).

**Tabelle 2**

| Eigenschaftsvergleich des Beispiels 1 mit den Vergleichsbeispielen 2 bis 8 | | | | | | |
|---|---|---|---|---|---|---|
| Beispiel | Festkörper bei Applikation (%) | Taber-Abriebtest (mg) (CS 10, 1 kg Belastung) | | Chemikalienbeständigkeit | | |
| | | 500 Umdr. | 1000 Umdr. | gesamt | Ethanol | Aceton |
| 1 | 100,0 | 7,0 | 14,5 | 4 | 0 | 2 |
| 2 | 77,6 | 17,7 | 36,0 | 0 | 0 | 0 |
| 3 | 77,1 | n.b.* | n.b.* | 0 | 0 | 0 |
| 4 | 62,9 | 36,3 | 76,7 | 8 | 2 | 3 |
| 5 | 100,0 | 4,5 | 10,5 | 1 | 0 | 0 |
| 6 | 100,0 | 3,0 | 9,0 | 4 | 0 | 3 |
| 7 | 100,0 | 10,3 | 21,0 | 0 | 0 | 0 |
| 8 | 100,0 | 6,0 | 12,3 | 0 | 0 | 0 |

| | | | | | | |
|---|---|---|---|---|---|---|
| *) n.b. = nicht bestimmbar, Filme sind zu weich und "verschmieren" beim Taber-Abrasionstest | | | | | | |

Zusätzliche Beschichtungsversuche auf Betonplatten mit einer relativen Betonfeuchte von 4 % mit den Versiegelungsmassen gemäß Beispielen 1, 5, 6 und 8, unter Variation der Filmdicke in einem Bereich von 50 bis 300 µm, ergaben, daß die Beschichtungssysteme gemäß Vergleichsbeispielen 5, 6 und 8 bereits bei Filmdicken von unter 100µm stark zur Blasenbildung neigen, ein Befund, der im Falle des erfindungsgemäßen Systems nicht beobachtet wurde.

## Patentansprüche

1. Zweikomponenten-Polyurethan-Beschichtungsmassen, bestehend im wesentlichen aus
A) einer Polyisocyanatkomponente,
B) einer Polyolkomponente und gegebenenfalls
C) aus der Beschichtungstechnologie üblichen Hilfs- und Zusatzstoffen,
wobei die Komponenten A) und B) in einem NCO/OH-Äquivalentverhältnis von 0,9:1 bis 1,3:1 entsprechenden Mengen vorliegen, dadurch gekennzeichnet, daß
die Komponente A) aus einem Gemisch aus
50 bis 95 Gew.-% (cyclo)aliphatischen Polyisocyanaten A1), bestehend zu
50 bis 100 Gew.-% aus Isocyanurat- und Uretdiongruppen aufweisenden Derivaten des 1,6-Diisocyanatohexans A1.1) mit einer Viskosität bei 23°C von 100 bis 300 mPa.s, einem Gehalt an Isocyanatgruppen von 20 bis 24 Gew.-% und einem Gehalt an Urethangruppen von 0 bis 5 Gew.-%
und zu
0 bis 50 Gew.-% aus anderen Lackpolyisocyanaten A1.2) mit (cyclo)aliphatisch gebundenen Isocyanatgruppen aus (i) Uretdiongruppen-freien, Isocyanuratgruppen aufweisenden Trimerisaten des 1,6-Diisocyanatohexans mit einem NCO-Gehalt von 20 bis 23 Gew.-% und/oder (ii) Biuretgruppen aufweisende Polyisocyanate auf Basis des 1,6-Diisocyanatohexans mit einem NCO-Gehalt von 21 bis 24 Gew.-%.
und
5 bis 50 Gew.-% aromatischen Polyisocyanaten A2), bestehend zu
50 bis 100 NCO-Äquivalent-% aus Urethangruppen aufweisenden Polyisocyanaten auf Basis von 2,4- und gegebenenfalls 2,6-Diisocyanatotoluol mit
i) einem NCO-Gehalt von 12 bis 20 Gew.-%,
ii) einem Gehalt an Urethangruppen (berechnet als CHNO₂) von 12 bis 29 Gew.-%
und zu
0 bis 50 NCO-Äquivalent-% aus anderen Polyisocyanaten A2.2) mit aromatisch gebundenen Isocyanatgruppen aus (i) Isocyanuratgruppen aufweisenden Trimerisaten des 2,4- und gegebenenfalls 2,6-Diisocyanatotoluols mit einem NCO-Gehalt von 14 bis 18 Gew.-% und/oder (ii) Isocyanuratgruppen aufweisenden Mischtrimerisaten des 1,6-Diisocyanatohexans mit 2,4- und gegebenenfalls 2,6-Diisocyanatotoluol mit einem NCO-Gehalt von 15 bis 20 Gew.-%
und die Polyolkomponente B) aus einem Gemisch aus
50 bis 100 Gew.-% organischen Polyhydroxylverbindungen B1) mit einem (mittleren) Hydroxylgehalt von 6 bis 23 Gew.-% und einer (mittleren) Hydroxylfunktionalität von 2 bis 4, ausgewählt aus der Gruppe bestehend aus (i) Polycaprolacton-Polyolen, (ii) Polyetherpolyolen, deren Alkylenoxid-Einheiten zu 80 bis 100 Gew.-% aus Propylenoxid-Einheiten und zu 0 bis 20 Gew.-% aus Ethylenoxideinheiten bestehen und (iii) Gemischen der unter (i) und (ii) genannten Polyhydroxylverbindungen
und
0 bis 50 Gew.-% aus anderen organischen Polyhydroxylverbindungen B2)
bestehen.

2. Beschichtungsmassen gemäß Anspruch 1, dadurch gekennzeichnet, daß die Polyolkomponente B2) aus mindestens einer, gegebenenfalls Ether- und/oder Estergruppen aufweisenden, von den Polyhydroxylverbindungen B1) verschiedenen Polyhydroxylverbindungen des Molekulargewichtsbereichs 62 bis 2 000 besteht.

3. Verwendung der Beschichtungsmassen gemäß Anspruch 1 zur Herstellung von Fußboden-Versiegelungen oder -Dünnbeschichtungen.

## Claims

1. Two-component polyurethane coating compounds substantially comprising
A) a polyisocyanate component
B) a polyol component and optionally
C) conventional auxiliary agents and additives from coating technology
wherein components A) and B) are present in amounts such that the ratio by equivalents of NCO to OH corresponds to 0.9:1 to 1.3: 1, characterised in that
component A) comprises a mixture of
50 to 95 wt.% of (cyclo)aliphatic polyisocyanates A1)
50 to 100 wt.% of which consist of derivatives of 1,6-diisocyanatohexane with isocyanurate and uretdione groups A1.1) with a viscosity of 100 to 300 mPa.s at 23°C, a concentration of isocyanate groups of 20 to 24 wt.% and a concentration of urethane groups of 0 to 5 wt.%
and 0 to 50 wt.% of which consist of other lacquer polyisocyanates A1.2) with (cyclo)aliphatically bonded isocyanate groups from (i) trimers of 1,6-diisocyanatohexane, containing isocyanurate groups but no uretdione groups, with an NCO-content of 20 to 23 wt.%, and/or (ii) polyisocyanates based on 1,6-diisocyanatohexane, containing biuret groups, with an NCO-content of 21 to 24 wt.%,
and
5 to 50 wt.% of aromatic polyisocyanates A2),
50 to 100 NCO-equivalent-% of which consist of polyisocyanates based on 2,4 and optionally 2,6-diisocyanatotoluene, containing urethane groups, with
i) an NCO-content of 12 to 20 wt.%,
ii) a concentration of urethane groups (calculated as CHNO₂) of 12 to 29 wt.%
and
0 to 50 NCO-equivalent-% of which consist of other polyisocyanates A2.2) with aromatically bonded isocyanate groups from (i) trimers of 2,4 and optionally 2,6-diisocyanatotoluene, containing isocyanurate groups, with an NCO-content of 14 to 18 wt.%, and/or (ii) mixed trimers of 1,6-diisocyanatohexane and 2,4 and optionally 2,6-diisocyanatotoluene, containing isocyanurate groups, with an NCO-content of 15 to 20 wt.%
and the polyol component B) comprises a mixture of
50 to 100 wt.% of organic polyhydroxyl compounds B1) with an (average) hydroxyl content of 6 to 23 wt.% and an (average) hydroxyl functionality of 2 to 4, selected from the group consisting of (i) polycaprolactone polyols, (ii) polyetherpolyols, 80 to 100 wt.% of the alkylene oxide units consisting of propylene oxide units and 0 to 20 wt.% consisting of ethylene oxide units, and (iii) mixtures of the polyhydroxyl compounds mentioned under (i) and (ii)
and
0 to 50 wt.% of other organic polyhydroxyl compounds B2).

2. Coating compounds according to Claim 1, characterised in that polyol component B2) consists of at least one polyhydroxyl compound, optionally containing ether and/or ester groups, which differs from polyhydroxyl compounds B1) and has a molecular weight in the range 62 to 2 000.

3. Use of the coating compounds according to Claim 1 to prepare sealants or thin coatings for floorings.

## Revendications

1. Produits de revêtement polyuréthane bicomposant constitués essentiellement de
A) un composant polyisocyanate,
B) un composant polyol et le cas échéant
C) les additifs et adjuvants usuels de la technologie des revêtements,
où les composants A) et B) sont en un rapport d'équivalent NCO/OH de 0,9:1 à 1,3:1 par leurs quantités correspondantes, caractérisés en ce que
on réalise le composant A) à partir d'un mélange de
50 à 95 % en poids de polyisocyanates A1) (cyclo)aliphatiques, constitués pour 50 à 100 % en poids de dérivés du 1,6-diisocyanatohexane A1.1) présentant des groupes isocyanurate et uretdione avec une viscosité à 23°C de 100 à 300 mPa.s, avec une teneur en groupes isocyanate de 20 à 24 % en poids et une teneur en groupes uréthane de 0 à 5 % en poids
et pour
0 à 50 % en poids d'autres polyisocyanates de peinture A1.2) avec des groupes isocyanates liés de manière (cyclo)aliphatique de (i) trimères du 1,6-diisocyanatohexane présentant des groupes isocyanurate, sans groupes uretdione avec une teneur en NCO de 20 à 23 % en poids et/ou (ii) des polyisocyanates présentant des groupes biuret à base de 1,6-diisocyanatohexane avec une teneur en NCO de 21 à 24 % en poids
et
5 à 50 % en poids de polyisocyanates aromatiques A2), constitués pour 50 à 100 % d'équivalents NCO de polyisocyanates présentant des groupes uréthane à base de 2,4 et le cas échéant 2,6-diisocyanatotoluène avec
i) une teneur en NCO de 12 à 20 % en poids,
ii) une teneur en groupes uréthane (calculée sous forme de CH₂NO₂) de 12 à 29 % en poids
et pour
0 à 50 % d'équivalents NCO d'autres polyisocyanates A2.2) avec des groupes isocyanate liés de manière aromatique à partir de (i) trimères du 2,4- et le cas échéant 2,6-diisocyanatotoluène présentant des groupes isocyanurate avec une teneur en NCO de 14 à 18 % en poids et/ou (ii) des trimères mixtes présentant des groupes isocyanurate du 1,6-diisocyanatohexane avec le 2,4- et le cas échéant le 2,6-diisocyanatotoluène avec une teneur en NCO de 15 à 20 % en poids
et le composant polyol B) est obtenu à partir d'un mélange de
50 à 100 % en poids de composés polyhydroxylés et organiques B1) avec une teneur en hydroxyle (moyenne) de 6 à 23 % en poids et une fonctionnalité en hydroxyle (moyenne) de 3 à 4, choisis dans le groupe constitué des (i) polycaprolactones-polyols, (ii) des polyétherpolyols, dont les unités oxyde d'alkylène sont constituées pour 80 à 100 % en poids de motifs oxyde de propylène et pour 0 à 20 % en poids de motifs oxyde d'éthylène et (iii) des mélanges des composés polyhydroxylés cités en (i) et (ii)
et
0 à 50 % en poids d'autres composés polyhydroxylés organiques B2).

2. Produits de revêtement selon la revendication 1, caractérisés en ce que le composant polyol B2) es constitué d'au moins l'un des composés polyhydroxylés de poids moléculaire compris entre 62 et 2 000 différents des composés polyhydroxylés B1), présentant le cas échéant des groupes éther et/ou ester.

3. Utilisation des produits de revêtement selon la revendication 1 pour produire des revêtements minces ou des vitrifications de sol.
